# EUROPEAN PATENT APPLICATION

(11) **EP 4 099 258 A1**
(43) Date of publication of application: **07.12.2022**
(21) Application number: 20916907.7
(22) Date of filing: 30.01.2020
(51) Int. Cl.: G06Q 50/02

(54) **INFORMATION PROCESSING DEVICE**

(71) Applicant: Sagri Co., Ltd., Tamba-shi, Hyogo, 669-3602 (JP)
(72) Inventor: TSUBOI, Shunsuke, Tamba-shi, Hyogo 669-3602 (JP)
(74) Representative: Feller, Frank
(86) International application number: PCT/JP2020/003433
(87) International publication number: WO 2021/152774

(57) **Abstract**

The purpose of the present invention is to enable farmers to receive small loans (microfinancing) from a financial institution quickly and at low interest by making it possible to appropriately evaluate agricultural land. A field information acquisition unit 103 acquires field information relating to a field of a farmer F, including at least information relating to soil. On the basis of the field information, a presentation information generation unit 105 generates farming information relating to the harvestability of the field, and credit information relating to the credit of the farmer. By this means, the above-mentioned purpose is met. The information processing device is favorably further provided with a polygon generation unit 101 which divides, by units for indicating fields, a ground surface image R that shows the aerially photographed ground surface, and a display control unit 106 which performs control for visualizing and displaying the farming information and credit information for each polygon P. Thus, the above-mentioned purpose is met.

## Description

### TECHNICAL FIELD

The present invention relates to an information processing device.

### BACKGROUND ART

Conventionally, there are technologies aimed at streamlining agriculture (see Patent Document 1, for example).

Patent Document 1: Japanese Unexamined Patent Application, Publication No. 2010-166851

### DISCLOSURE OF THE INVENTION

### Problems to be Solved by the Invention

However, with the conventional technologies alone including the technology of Patent Document 1, it is not possible to easily grasp the potential harvest yield of agricultural land. Therefore, financial institutions, for example, are not able to estimate the future potential of the agricultural land of a farmer on the basis of the cost, and become reluctant to fulfil a small loan (microfinancing) request from the farmer. As a result, farmers are not able to do active farm management.

The present invention is designed in view of the foregoing circumstance, and it is an object thereof to make it possible to easily grasp the potential harvest yield of agricultural land.

### Means for Solving the Problems

In order to achieve the foregoing object, an information processing device according to a first aspect of the present invention includes: an acquisition unit that acquires first information relating to a field of a farmer, including at least information relating to soil; and a generation unit that generates second information relating to harvestability of the field and third information relating to credibility of the farmer based on the first information.

### Effects of the Invention

According to the present invention, it is possible to easily grasp the potential harvest yield of agricultural land.

### BRIEF DESCRIPTION OF THE DRAWINGS

FIG. 1 is a diagram illustrating an overview of a present service that is an application target of an information processing system to which a server according to an embodiment of an information processing device of the present invention is applied;
FIG. 2A is a diagram illustrating a specific example of an AI model;
FIG. 2B is a diagram illustrating a specific example of an AI model;
FIG. 2C is a diagram illustrating a specific example of an AI model;
FIG. 3A is a graph indicating a result of machine learning;
FIG. 3B is a graph indicating a result of machine learning;
FIG. 4 is a diagram illustrating an example of polygons generated by the present service;
FIG. 5 is a diagram illustrating an example of a configuration of the information processing system to which the server according to the embodiment of the information processing device of the present invention is applied;
FIG. 6 is a block diagram illustrating an example of a hardware configuration of the server in the information processing system illustrated in FIG. 5;
FIG. 7 is a block diagram illustrating an example of a functional configuration used for executing scoring processing out of the functional configuration of the information processing system including the server illustrated in FIG. 6;
FIG. 8 is a diagram illustrating an example of a UI displayed on a farmer terminal in the information processing system illustrated in FIG. 5;
FIG. 9 is an image chart illustrating an overview of an algorithm used when generating farming information based on field information;
FIG. 10 is an image chart illustrating an overview relating to linkage of data acquired as field information;
FIG. 11 is a diagram illustrating a specific example of a field search screen;
FIG. 12 is a diagram illustrating a specific example of polygon generation using machine learning;
FIG. 13A is a diagram illustrating a specific example of polygon generation using machine learning;
FIG. 13B is a diagram illustrating a specific example of polygon generation using machine learning; and
FIG. 13C is a diagram illustrating a specific example of polygon generation using machine learning.

### PREFERRED MODE FOR CARRYING OUT THE INVENTION

Hereinafter, an embodiment of the present invention will be described with reference to the accompanying drawings.

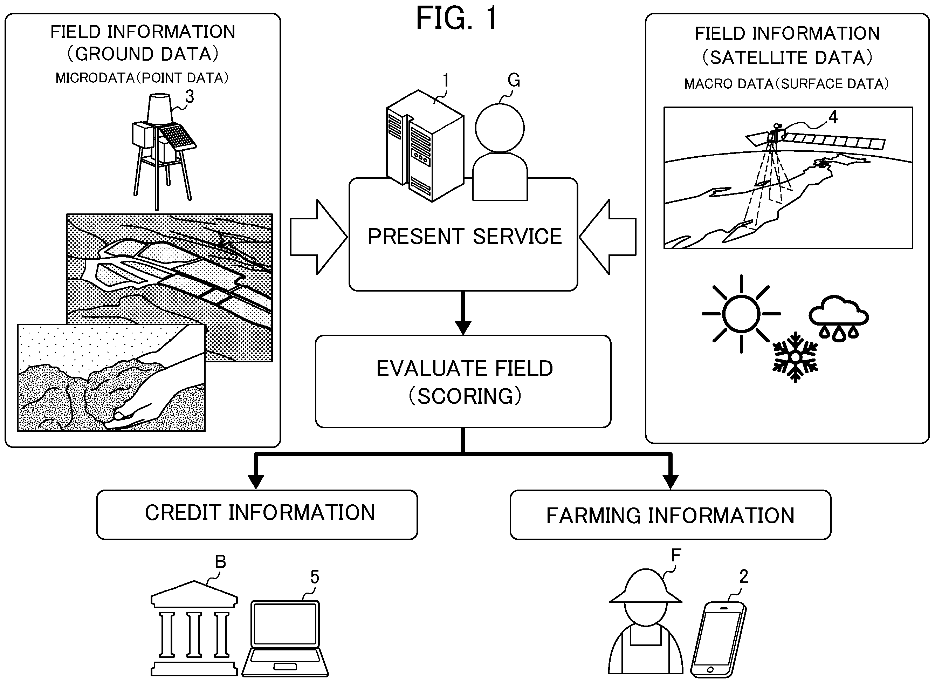

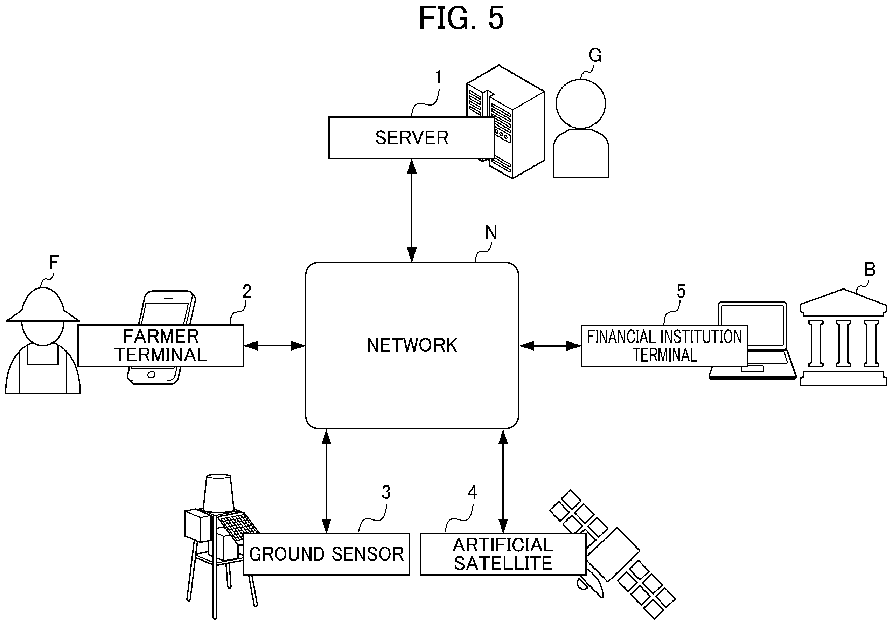

First, described by referring to FIG. 1 to FIG. 4 is an overview of a service (referred to as "present service" hereinafter) to be an application target of an information processing system (see FIG. 5 to be described later) to which a server 1 according to an embodiment of an information processing device of the present invention is applied.

FIG. 1 is a diagram illustrating an overview of the present service that is an application target of the information processing system to which the server according to the embodiment of the information processing device of the present invention is applied.

In FIG. 1, illustrated are: a service provider G that provides the present service; a farmer F engaging in agriculture by using one or more fields configuring agricultural land for cultivating crops; and a financial institution B that provides a small loan (microfinancing) to the farmer F based on information relating to credibility of the farmer F (referred to as "credit information" hereinafter). Furthermore, in FIG. 1, illustrated are: the server 1 that is managed by the service provider G; a farmer terminal 2 that is operated by the farmer F; and a financial institution terminal 5 that is operated by the financial institution B.

In each of the farmer terminal 2 and the financial institution terminal 5, dedicated application software for the users of the present service (referred to as "dedicated app" hereinafter) is installed. Each of the farmer F and the financial institution B can receive the present service by using the dedicated app. Furthermore, each of the farmer F and the financial institution B can also receive the present service by accessing a dedicated website for the users of the present service (referred to as "dedicated site" hereinafter) displayed by respective browser functions of the farmer terminal 2 and the financial institution terminal 5.

Hereinafter, when expressed as "the farmer F operates the farmer terminal 2", it means one of the followings unless otherwise noted. That is, it means that the farmer F starts the dedicated app installed in the farmer terminal 2 and performs various kinds of operations, or accesses the dedicated site displayed by the browser function of the farmer terminal 2 and uses the present service. Furthermore, when expressed as "the financial institution B operates the financial institution terminal 5", it means one of the followings. That is, it means that the financial institution B starts the dedicated app installed in the financial institution terminal 5 and performs various kinds of operations, or accesses the dedicated site displayed by the browser function of the financial institution terminal 5 and uses the present service.

Furthermore, in FIG. 1, a ground sensor 3 and an artificial satellite 4 are illustrated. The ground sensor 3 is a sensor group placed on the ground. The ground sensor 3 detects information relating to soil, weather, and topography of the fields of the farmer F (referred to as "field information" hereinafter). The artificial satellite 4 detects the field information for each of the fields from the orbit of the earth.

The present service is an example of the service provided from the service provider G to each of the farmer F and the financial institution B as the users of the present service. As for the present service, the field information detected by the ground sensor 3 is treated as "ground data", and the past and current field information detected by the artificial satellite 4 is treated as "satellite data". In other words, the ground data is characterized to be microdata (point data as true values) that can be used for diagnosis of the soil condition, while the satellite data is characterized to be macro data (surface data including errors). Note that the satellite data may be the data provided by a prescribed satellite data platform using the satellite data provided by a prescribed organization (for example, a national organization).

With the present service, potential crop harvest yield of each of one or more registered fields is evaluated based on the field information. For the evaluation, information such as humus content, nitrogen content, and the like acquired from the field information is used as indices. Note that "humus content" means the amount of the humus contained in the soil of the field. The "humus" is the black substance (polymer compound) generated when remains of dead animals and plants accumulated in the soil break down. The humus gives a significant influence on the characteristic of the soil and the productivity. With the present service, it is possible to acquire and display the humus content for each field instantly over a wide area. Note that "nitrogen content" means the amount of nitrogen contained in the soil of the field, and it is calculated based on the vegetation index. Note that "vegetation" means a group of plants grown in clusters in a prescribed area. The "vegetation index" means an index for grasping the vegetation condition (amount and vitality of the plants). The vegetation index is calculated from the satellite data by using the characteristic of light reflection of the plants. As the vegetation index, it is possible to employ NDVI (Normalized Difference Vegetation Index), for example. With the present service, it is possible to acquire and display the nitrogen content for each field instantly over a wide area. Therefore, it can be used for variable fertilization with which the amount of fertilizer applied to the soil is controlled, for example.

With the present service, the evaluation relating to the potential crop harvest yield of the field is executed based on prescribed indices (for example, humus content and nitrogen content). The result of evaluation is calculated as a normalized numerical value (referred to as "potential harvest yield score" hereinafter). Then, based on the calculated potential harvest yield score, information relating to farm management (referred to as "farming information" hereinafter) and credit information of the farmer F are generated. As for the generated farming information and credit information, the farming information is mainly used by the farmer F, and the credit information is mainly used by the financial institution B. The farmer F can achieve efficient farming by being provided with the farming information. With the credit information provided thereto, the financial institution B can actively provide a small loan (microfinancing) to the farmer F, which has not been possible due to the cost.

There is no specific limit set in terms of in what form each of the farming information and the credit information is provided to be used by each of the farmer F and the financial institution B. Each of the farming information and the credit information can be provided in any form that may be easily provided to be used by each of the farmer F and the financial institution B. In the present service, the farming information and the credit information are visualized to be provided to each of the farmer F and the financial institution B. There is no specific limit set for the method for visualizing the farming information and the credit information, and such information may be visualized by a table, a graph, or the like. With the present service, as the method for visualizing the farming information and the credit information, a polygon is generated as a unit indicating a field included in captured image data (referred to as "ground surface image" hereinafter) that is acquired by capturing the ground surface from the air, or included in a map.

Furthermore, with the present service, it is possible to easily identify abandoned farmland based on the satellite data as the field information and existing data. The abandoned farmland may be identified by changing colors or patterns of the polygons. Note that "abandoned farmland" means a field where no crops are planted for one year or longer, and the farmer F indicates that there is no plan to plant crops therein in several years. Specifically, work for chronologically reading the changes in each of the fields is performed by using differences in the characteristics in the time series changes among the satellite data, land cover classification (existing data), and NDVI. Note that "land cover" means information indicating the physical state of the ground surface. Examples of the land cover may be concrete, forest, grassland, water surface, soil, and the like. With the present service, it is possible to grasp the land cover over a wide area based on the satellite data (field information). Thereby, the farmer F can restart planting of crops in the abandoned farmland considered to have future prospect, based on the potential harvest yield score of the abandoned farmland. As a result, it is expected to reduce the abandoned farmland.

In a case where the field is a paddy field, estimation of the cultivation time, protein content of rice, and paddy fertility as the important factors in rice cultivation is conducted based on the colors of the ground surface acquired from the satellite data (field information) and the existing data. Specifically, the timing where the rice plant changes from green to gold is suitable for cultivation, for example. Thus, with the present service, cultivation time is estimated by using a ground surface image that is captured from August to September where ears of rice come out is used among the satellite data (field information). For analysis of the ground surface image, a red visible light wavelength and a near-infrared wavelength are used.

Furthermore, when the integrated value of the average air temperatures reaches 900°C, it is the appropriate cultivation time. Therefore, weather information or AMeDAS air temperature data among the existing data is used for estimation of the cultivate time, and the average air temperatures of the days after the ears of rice come out are integrated. That is, with the present service, correction (integration) of ground data is executed by correlating the weather information as the satellite data (field information) and the ground AMeDAS with the ground data. Furthermore, integration of the point data (ground data) on the surface data (satellite data) is executed.

Furthermore, for example, the protein content of rice is an important factor for determining the taste of rice. The protein content may also be an index for determining whether a proper amount of fertilizer is being used. Thus, with the present service, a ground surface image among the satellite data (field information) is used for estimation of the protein content. For analysis of the ground surface image, a green visible light wavelength and a near-infrared wavelength are used.

Furthermore, for example, the fertility of a paddy field (field) indicated by the organic matter content is an important factor for selecting the paddy field (field) for growing rice. Specifically, when the organic matter content is about 8%, it is considered to be able to grow rice of good quality. Thus, with the present service, a ground surface image among the satellite data (field information) is used for estimation of the fertility of the paddy field (field). The color of the paddy field (field) included in the ground surface image becomes closer to black as the organic matter content becomes higher, while it becomes close to light brown when the organic matter content is low.

Furthermore, according to the present invention, it is possible to provide a following service, for example, in addition to the above-described service.

For example, the field information (ground data, satellite data) including time series data (stream data) generated continuously can be managed in an associated manner by using a blockchain technology (distributed ledger technology or distributed network). This makes it possible to digitalize various kinds of information relating to crops from production to distribution of the crops, and to manage it under an environment where there is less risk of tampering. The information to be digitalized includes field information, cultivation record, fertilization record, pesticide spraying record, yield record, soil diagnosis record, satellite monitoring record, biological monitoring record, soil monitoring record, weather monitoring record, and the like.

Furthermore, for example, it is also possible to add values to the ground data so as to treat it as a token. That is, it is possible to provide an ICO (Initial Coin Offering) type crowdfunding platform. This makes it possible to create an environment where the ground data can be shared.

Furthermore, for example, it is also possible to provide a market platform as a sales channel of crops produced by the farmer F. This makes it possible to fully support the farm management of the farmer F from production to distribution of the crops.

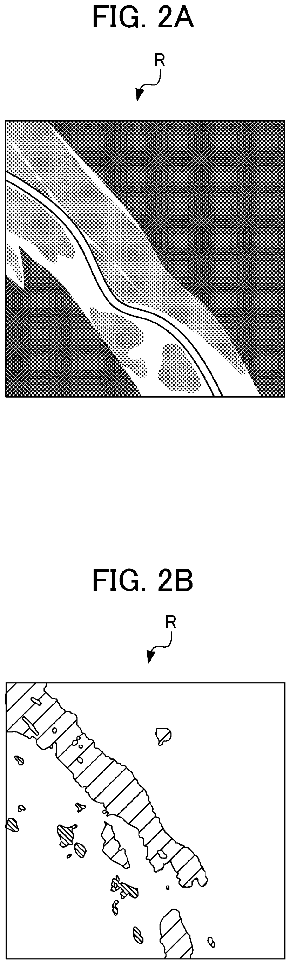

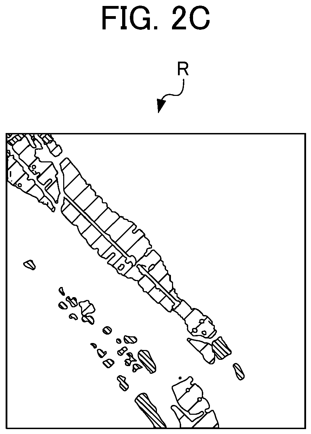

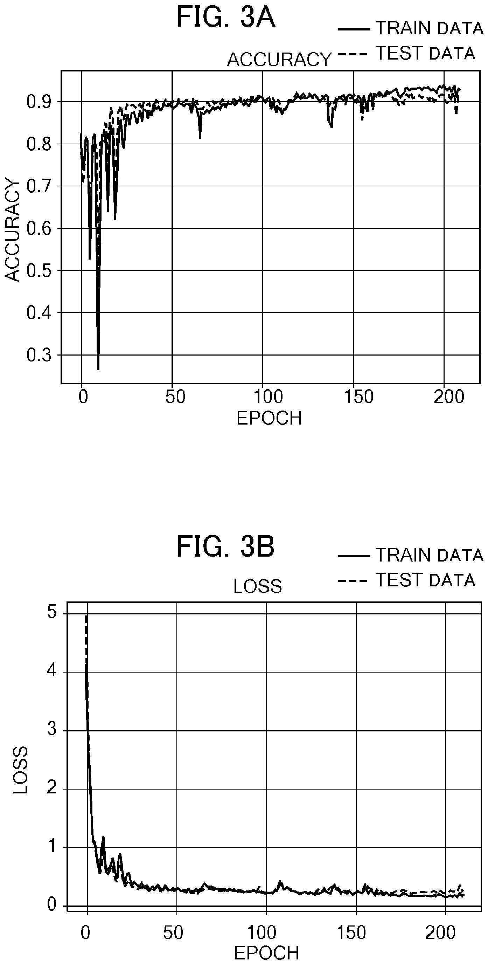

Furthermore, for example, it is possible to provide an AI (Artificial Intelligence) model. That is, the result of machine learning such as deep learning performed by using the accumulated field information can be output as a model. FIGS. 2A to 2C are diagrams illustrating specific examples of AI models. FIGS. 3A to 3B are graphs indicating the result of machine learning.

With the present service, various kinds of processing including generation of the polygons P and scoring processing described above are executed. Specifically, for example, executed is the processing such as prediction relating to distribution of moisture penetration in soil, categorization of soil geology characteristic, prediction of soil moisture at each depth, optimization of cultivator control, yield analysis, analysis of fertility/pesticide spraying distribution, prediction of yield and cultivation time, and the like. With such processing, machine learning such as deep learning is executed. For example, machine learning is executed for image analysis of a ground surface image R included in the satellite data as illustrated in FIGS. 2A to 2C. Furthermore, the result of machine learning is indicated in FIGS. 3A and 3B as the graphs. That is, FIG. 3A is the graph indicating the relation between training data (TRAIN DATA) and test data (TEST DATA) for testing, where the lateral axis is the number of learning times (EPOCH) and the longitudinal axis is the accuracy rate (ACCURACY). Furthermore, FIG. 3B is the graph indicating the relation between training data (TRAIN DATA) and test data (TEST DATA) for testing, where the lateral axis is the number of learning times (EPOCH) and the longitudinal axis is the loss function (LOSS).

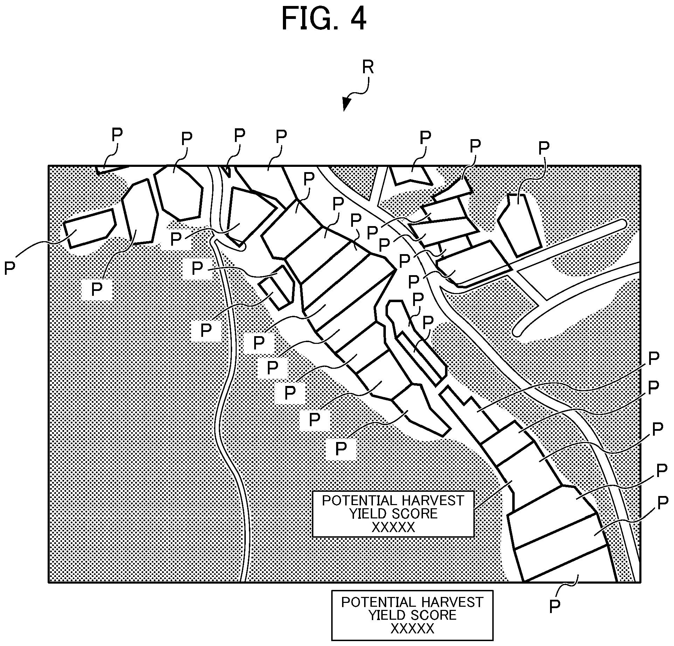

FIG. 4 is a diagram illustrating an example of polygons generated in the present service.

As illustrated in FIG. 4, with the present service, the polygons P each being the unit of field is generated. The polygons P are displayed by being superimposed on each of one or more fields included in the ground surface image R. The shape of the individual polygon P is a shape that fits along the outer edge of the area of the corresponding field. Thereby, the farmer F can easily grasp the shapes of the individual fields as well as the relative positions and sizes by simply having a glance at the polygons P. Note that there is no specific limit set for the method for generating the polygons P. The polygons P may be generated by using field plot information provided by a prescribed organization (for example, a national organization). Furthermore, the polygons P may be generated by performing image analysis of data such as captured images of the ground surface included in the satellite data or aerial photographs used in general.

On the polygon P displayed in the ground surface image R, a potential harvest yield score may be displayed. There is no specific limit set for the form of the potential harvest yield score displayed on the polygon P. As illustrated in FIG. 4, for example, a numerical value or the like may be displayed in a speech balloon or the like applied to each of the polygons P. Furthermore, the potential harvest yield score may be displayed outside the ground surface image R. Moreover, although not illustrated, colors or patterns capable of identifying the potential harvest yield scores may be applied to the polygons P.

Next, by referring to FIG. 5, the configuration of the information processing system for implementing provision of the present service described above, that is, the information processing system including the server 1 according to the embodiment of the information processing device of the present invention, will be described. FIG. 5 is a diagram illustrating an example of the configuration of the information processing system to which the server according to the embodiment of the information processing device of the present invention is applied.

The information processing system illustrated in FIG. 5 is configured to include the server 1, the farmer terminal 2, the ground sensor 3, the artificial satellite 4, and the financial institution terminal 5. Each of the server 1, the farmer terminal 2, the ground sensor 3, the artificial satellite 4, and the financial institution terminal 5 are connected mutually via a prescribed network N such as the Internet.

The server 1 is an information processing device managed by the service provider G. The server 1 executes various kinds of processing for achieving the present service while communicating with each of the farmer terminal 2, the ground sensor 3, the artificial satellite 4, and the financial institution terminal 5 as appropriate.

The farmer terminal 2 is an information processing device operated by the farmer F. The farmer terminal 2 is configured with a personal computer, a smartphone, a tablet, or the like, for example.

The ground sensor 3 is a sensor group placed in the field. The ground sensor 3 detects various kinds of information relating to the field on the ground, and transmits the result thereof to the server 1 as the field information. The sensors configuring the ground sensor 3 include a temperature (air temperature and soil temperature) sensor, a precipitation measurement sensor (rain gauge wet leaf sensor), a wind speed, direction, volume sensor, a soil moisture sensor, a sunlight sensor (wind power sunlight sensor), and the like.

The artificial satellite 4 is an artificial satellite existing on the orbit of the earth for a prescribed purpose. The artificial satellite 4 detects various kinds of information relating to the fields from the air, and transmits the result thereof to the server 1 as the field information. The information detected by the artificial satellite 4 includes the air temperature, humidity, amount of sunlight, ground surface temperature, soil moisture content, precipitation, plant activity, protein content, soil humus content, soil nitrogen content, and the like, for example.

The financial institution terminal 5 is an information processing device operated by the financial institution B. The financial institution terminal 5 is configured with a personal computer, a smartphone, a tablet, or the like, for example.

Both of the farmer terminal 2 and the financial institution terminal 5 may not need to be dedicated devices for using the present service. For example, it is possible to use the present service by installing a dedicated app to a smartphone carried by the farmer F and a personal computer for office work placed in the financial institution B. Furthermore, for example, it is also possible to use the present service by using the respective browser functions of the smartphone carried by the farmer F and the personal computer for office work placed in the financial institution B.

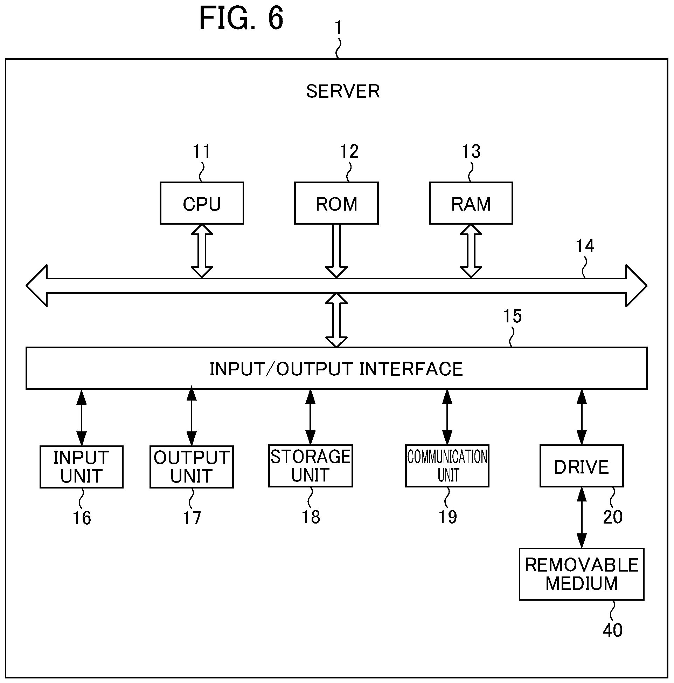

FIG. 6 is a block diagram illustrating an example of a hardware configuration of the server in the information processing system illustrated in FIG. 5.

The server 1 includes: a CPU (Central Processing Unit) 11; a ROM (Read Only Memory) 12; a RAM (Random Access Memory) 13; a bus 14; an input/output interface 15; an input unit 16; an output unit 17; a storage unit 18; a communication unit 19; and a drive 20.

The CPU 11 executes various kinds of processing according to a program recorded in the ROM 12 or a program loaded to the RAM 13 from the storage unit 18. Data and the like necessary for the CPU 11 to execute various kinds of processing are also recorded on the RAM 13 as appropriate.

The CPU 11, the ROM 12, and the RAM 13 are mutually connected via the bus 14. The input/output interface 15 is also connected to the bus 14. To the input/output interface 15, the input unit 16, the output unit 17, the storage unit 18, the communication unit 19, and the drive 20 are connected.

The input unit 16 is configured with a keyboard and the like, for example, for inputting various kinds of information. The output unit 17 is configured with a display of liquid crystal or the like, a speaker, and the like, and outputs various kinds of information as image or voice. The storage unit 18 is configured with a DRAM (Dynamic Random Access Memory) or the like, and stores various kinds of data. The communication unit 19 communicates with other devices (the farmer terminal 2, the financial institution terminal 5, and the like of FIG. 5, for example) via the network N including the Internet.

To the drive 20, a removable medium 40 such as a magnetic disk, an optical disk, a magneto-optical disk, a semiconductor memory, or the like is mounted as appropriate. The program read from the removable medium 40 by the drive 20 is installed into the storage unit 18 as necessary. Furthermore, like the storage unit 18, the removable medium 40 can also store various kinds of data stored in the storage unit 18.

Although not illustrated, the farmer terminal 2 and the financial institution terminal 5 of FIG. 5 can have basically the same configuration with the hardware configuration illustrated in FIG. 6. Thus, explanations of the hardware configurations of the farmer terminal 2 and the financial institution terminal 5 are omitted.

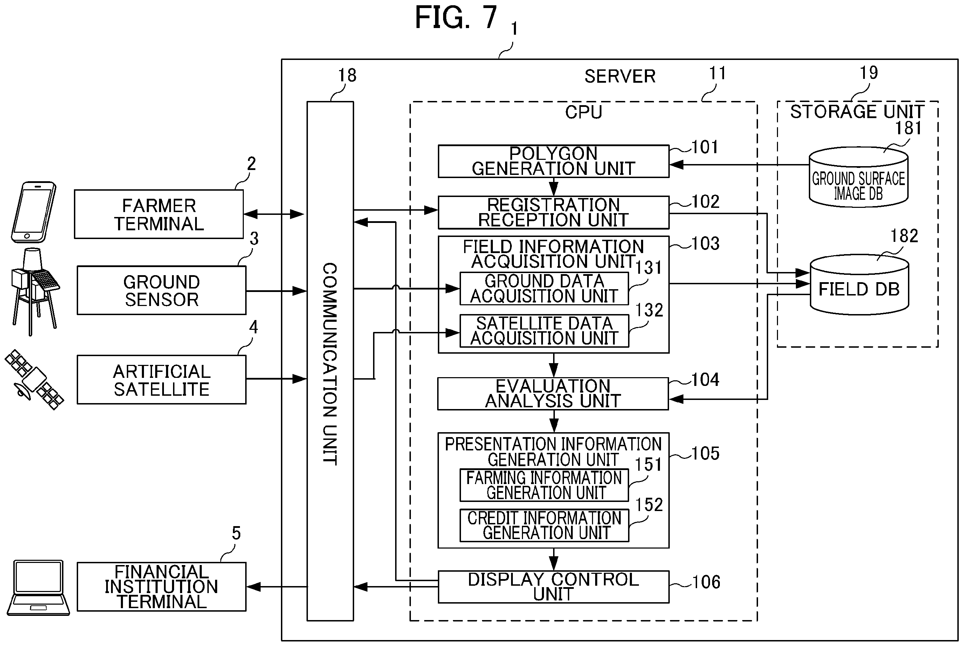

By collaboration of various kinds of hardware and various kinds of software of the server 1 illustrated in FIG. 6 described above, various kinds of processing including scoring processing by the server 1 can be executed. As a result, the service provider (not illustrated) can provide the present service to the farmer F and the financial institution B. Note that "scoring processing" is processing executed by the server 1 for providing the present service. Hereinafter, a functional configuration for executing the scoring processing that is executed by the server 1 according to the present embodiment will be described by referring to FIG. 7.

FIG. 7 is a block diagram illustrating an example of the functional configuration for executing the scoring processing out of the functional configuration of the information processing system including the server of FIG. 6.

As illustrated in FIG. 7, when execution of the scoring processing is controlled, a polygon generation unit 101, a registration reception unit 102, a field information acquisition unit 103, an evaluation analysis unit 104, a presentation information generation unit 105, and a display control unit 106 function in the CPU 11 of the server 1. Furthermore, in an area of the storage unit 18 of the server 1, a ground surface image DB 181 and a field DB 182 are provided. In the ground surface image DB 181, the ground surface images R are stored and managed. In the field DB 182, the field information of each of n-pieces (n is an integer value of 1 or larger) of fields is managed by being associated with information (for example, ID) that is capable of uniquely identifying each of the n-pieces of fields.

The polygon generation unit 101 sections the ground surface image R into each of the polygons P. Specifically, for example, as illustrated in FIG. 4, the polygon generation unit 101 sections the ground surface image R into a plurality of polygons P.

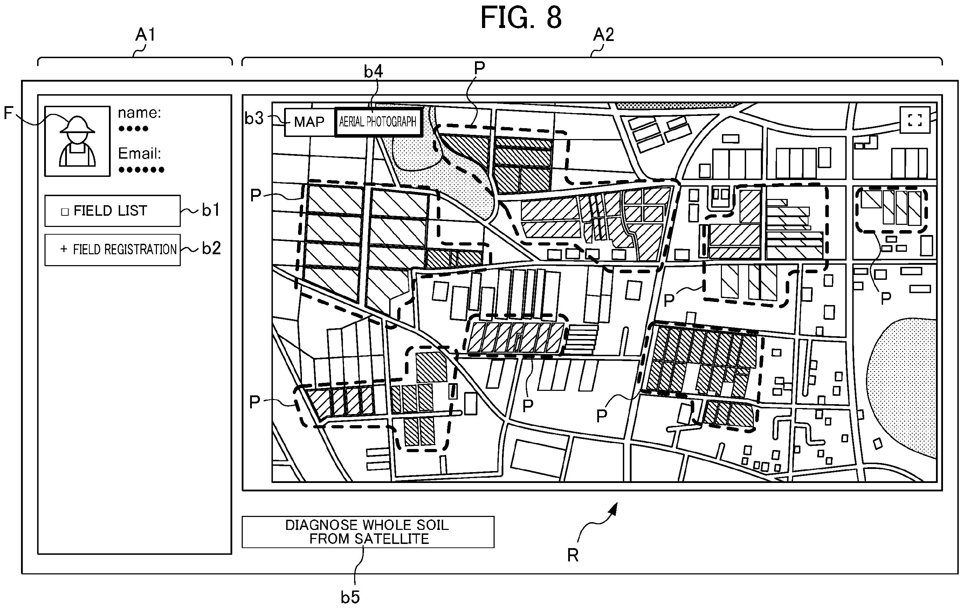

The registration reception unit 102 receives registration of the field. Specifically, for example, when a button b2 provided on a UI (User Interface) illustrated in FIG. 8 to be described later is pressed to designate the field to be the registration target, the registration reception unit 102 accepts registration of the designated field.

The field information acquisition unit 103 acquires field information of the field of the farmer F including at least the information relating to the soil. Specifically, in the field information acquisition unit 103, a ground data acquisition unit 131 and a satellite data acquisition unit 132 function. The ground data acquisition unit 131 acquires the ground data acquired from the ground sensor 3 as the field information of the field. The satellite data acquisition unit 132 acquires the satellite data acquired from the artificial satellite 4 as the field information of the field.

Furthermore, the field information acquisition unit 103 acquires, for each of the polygons P, the field information of the field of the farmer F including at least the information relating to the soil. In this case, the ground data acquisition unit 131 acquires, for each of the polygons P, the ground data acquired from the ground sensor 3 as the field information of the field. The satellite data acquisition unit 132 acquires, for each of the polygons P, the satellite data acquired from the artificial satellite 4 as the field information of the field.

The evaluation analysis unit 104 performs evaluation (scoring) of the field for each of the polygons P based on the field information of the field. Specifically, the evaluation analysis unit 104 performs evaluation (scoring) of the field based on the ground data acquired from the ground sensor 3, the satellite data acquired from the artificial satellite 4, the existing data, and the like as the field information.

The presentation information generation unit 105 generates farming information relating to the indices indicating the harvestability of the field (for example, humus content and nitrogen content described above) and credit information relating to the credibility of the farmer F based on the field information.

The display control unit 106 executes the control to visualize and display the farming information or the credit information for each of the polygons in the ground surface image R. Specifically, for example, as illustrated in FIG. 6, the display control unit 106 executes the control for visualizing and displaying the farming information or the credit information by applying a color or pattern to each of the polygons P in the ground surface image R. Thereby, the farmer F and the financial institution B can easily grasp the farming information and the credit information of each field by simply having a glance at the polygons P displayed in the ground surface image R.

Next, a specific example of the present service will be described by referring to FIG. 8 to FIG. 13C. FIG. 8 is a diagram illustrating an example of the UI displayed in the farmer terminal of the information processing system illustrated in FIG. 5.

The UI illustrated in FIG. 8 is configured with display areas A1 and A2. In the display area A1, information relating to the farmer F (name and email address), the button b1 indicated as "field list", a button b2 indicated as "field registration" are displayed. The button b1 is a button for displaying, in the display area A2, the fields that are registered to the present service by the farmer F. The button b2 is a button that is to be pressed when the farmer F registers the own field.

The farmer F presses the button b2, when registering the field owned by itself. When the button b2 is pressed, the ground surface image R for specifying the field to be the target of registration is displayed in the display area A2. Although not illustrated, in the ground surface image R displayed in the display area A2, each of the polygons P indicating each of one or more fields is displayed. In order to display the field to be the target of registration (the polygon P existing within a broken line in FIG. 4, for example) in the ground surface image R, the farmer F performs an operation for slide-displaying the ground surface image R, an operation for enabling enlarged/reduced display, an operation for performing address search, or the like. When the field (polygon P) to be the target of registration is displayed in the ground surface image R, the farmer F performs an operation for designating and registering the target field (polygon P). Thereby, the field is registered to the present service.

When checking the own fields registered to the present service, the farmer F presses the button b1. When the button b1 is pressed, the ground surface image R including one or more polygons P is displayed in the display area A2. The polygons P each being the unit of the fields are displayed by being superimposed on the respective fields. In the example illustrated in FIG. 8, a plurality of polygons P are displayed in a plurality of respective areas indicated by a broken line. Thereby, the farmer F can easily grasp the positional relation, shapes, sizes, and the like of the own fields by making comparison with the other fields. Furthermore, while an aerial photograph is displayed as the ground surface image R in the example of FIG. 8, the aerial photograph displayed in the display area A2 is switched to a map when a button b3 indicated as "map" is pressed. Furthermore, when a button b4 indicated as "aerial photograph" is pressed in a state where the map is being displayed in the display area A2, it is switched again to the aerial photograph. Thereby, the farmer F can easily perform specification of the own fields included in the aerial photograph as the ground surface image R and specification of the own fields included in the map as the ground surface image R.

The farmer F selects an arbitrary polygon P among one or more polygons P displayed in the ground surface image R, and then presses a button b5 indicated as "diagnose whole land from satellite". Upon that, for the field corresponding to the selected polygon P, evaluation based on the satellite data (field information) or evaluation based on the ground data (field information) and the satellite data (field information) is performed. Furthermore, not only the evaluation of the field corresponding to the selected polygon P but also evaluation for each of the fields corresponding to each of all polygons P displayed in the ground surface image R may be performed.

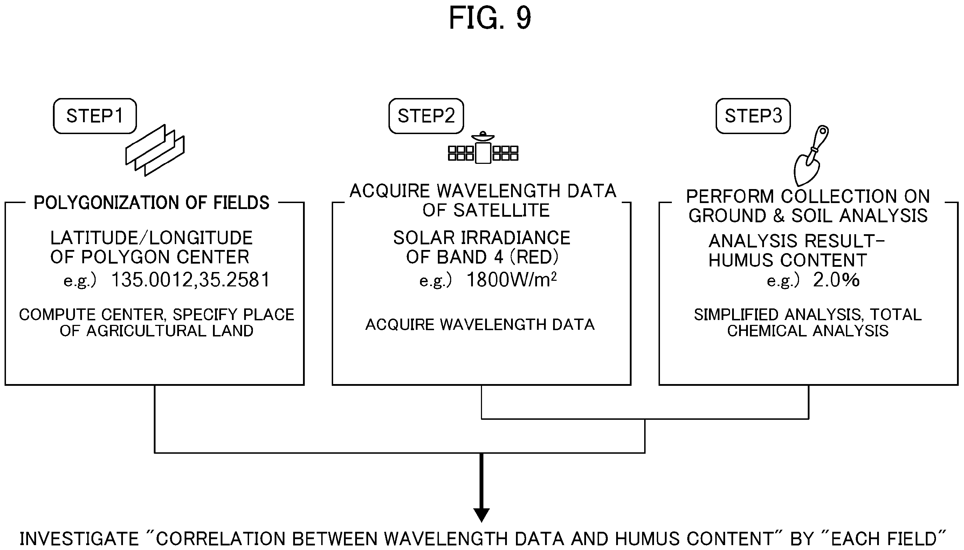

FIG. 9 is an image chart illustrating an overview of an algorithm used when generating the farming information based on the field information.

As illustrated in FIG. 9, with the present service, polygonization (generation of the polygons P) of the fields is performed first. Specifically, latitude/longitude coordinates of the centers of the polygons P are calculated by computation of the centers. Thereby, positions of the fields are specified (STEP 1). Then, as the satellite data, wavelength data of the artificial satellite 4 is acquired (STEP 2). Next, as the ground data, soil of the ground is collected, and analysis of the collected soil is performed (STEP 3). Thereafter, "correlation between wavelength data and humus content" of "each field" is investigated. The result of investigation is output as raw information of various kinds of data collected as the field information, a scatter plot or a determination coefficient indicating the humus condition.

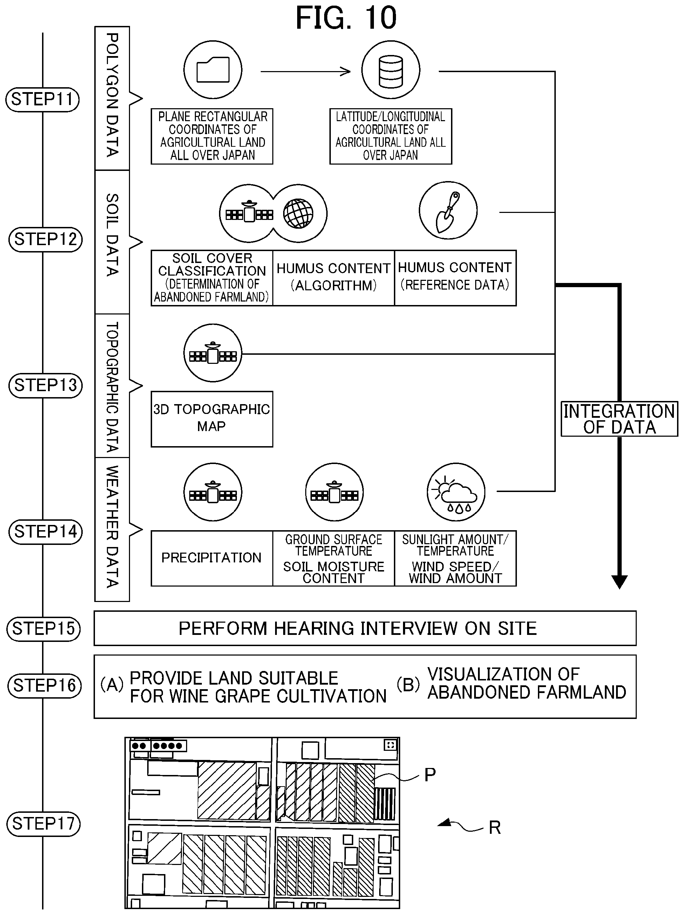

FIG. 10 is an image chart illustrating an overview relating to linkage of data acquired as the field information.

As illustrated in FIG. 10, with the present service, the polygons P are generated first (STEP 11). Specifically, for example, as the existing data, it is possible to use plane rectangular coordinates of agricultural land all over Japan and latitude/longitude coordinates of agricultural land all over Japan provided by a national organization.

Then, soil data as the field information is acquired (STEP 12). Thereby, "when and how much" vegetation was planted is detected. Specifically, from the satellite data or the existing data, acquired are information indicating the soil cover classification used for determining the abandoned farmland and information indicating the humus content by the algorithm of FIG. 9. Furthermore, from the ground data of soil sampling, information indicating the humus content as reference information is acquired.

Next, topographic data is acquired (STEP 13). Specifically, from the satellite data or the existing data, information indicating a 3D topographic map is acquired. Furthermore, weather data is acquired (STEP 14). Specifically, from the satellite data or the existing data, information indicating each of precipitation, ground surface temperature, soil moisture content, amount of sunlight, temperature, wind speed, and wind volume is acquired. Note that STEP 12 to STEP 14 may be performed in any order.

Next, the acquired soil data, topographic data, weather data are integrated, and a hearing interview is performed on the spot (STEP 15).

Then, farming information is generated, and visualization (identification) of the abandoned farmland is performed (STEP 16). Specifically, for example, as the farming information, information (A) relating to land suitable for wine grape cultivation is provided to the farmer F. Furthermore, information (B) of visualized abandoned farmland is provided to a local public entity, for example. Then, reflection of the data to the dedicated app, storage of the field information, and visualization (coloring) of the field condition are performed (STEP 17).

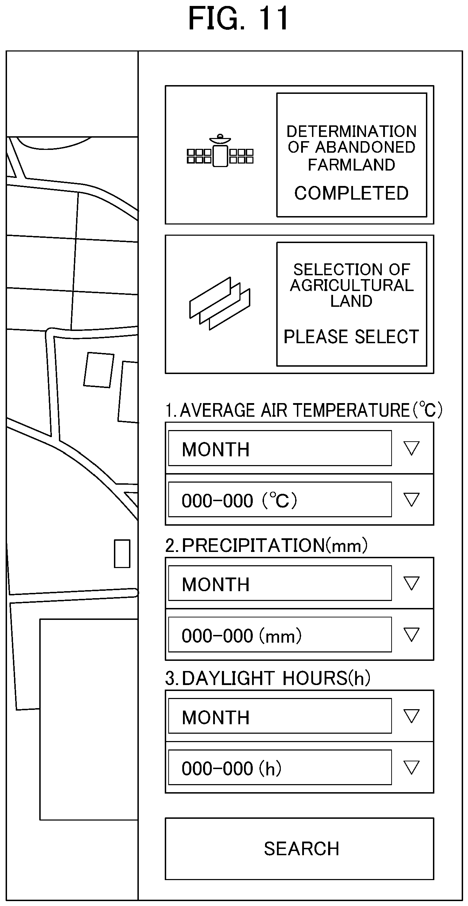

FIG. 11 is a diagram illustrating a specific example of a field search screen.

On the dedicated app used when using the present service, the UI as illustrated in FIG. 11, for example, is displayed. Specifically, it is displayed along with the ground surface image R of FIG. 8. With the UI illustrated in FIG. 11, it is possible to easily search the field on which determination (identification) of the abandoned farmland is completed or to search the field using the average air temperature, precipitation, and daylight hours as the search conditions. The search result is displayed in the ground surface image R of FIG. 8. Thus, the searcher can easily grasp the position and size of the field, the positional relation with respect to the surrounding fields, and the like.

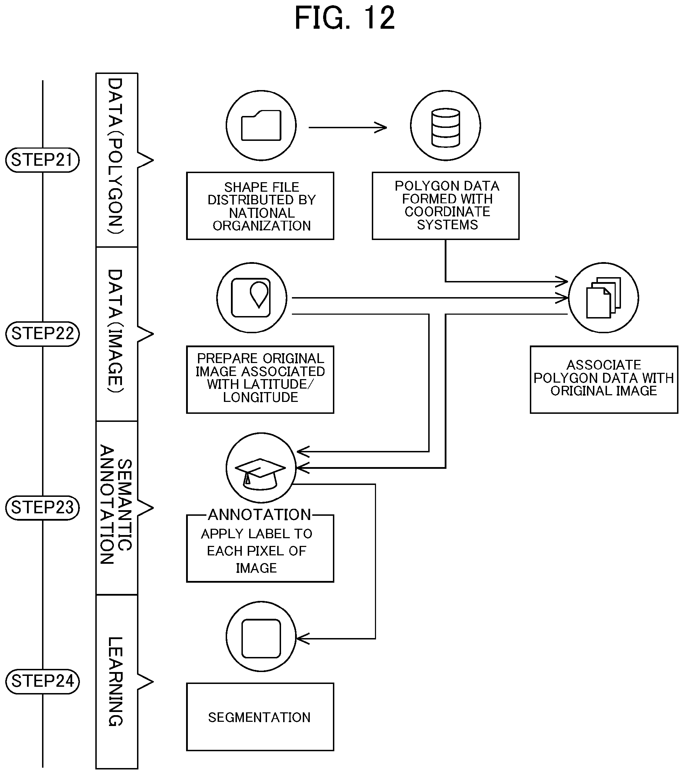

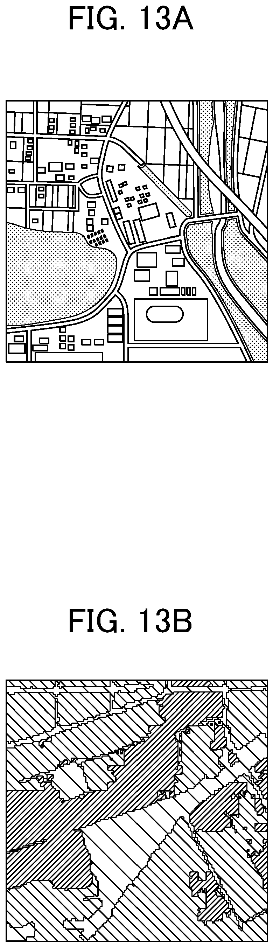

FIG. 12, and FIG. 13A to FIG. 13C are diagrams illustrating specific examples of polygon generations using machine learning.

As illustrated in FIG. 12, with the present service, first, the data necessary for generating the polygons P is acquired. For example, based on the shape file distributed by a national organization, polygon data formed with coordinate systems is generated and saved in the database (STEP 21).

Then, an original image of the ground image corresponding to the latitude/longitude and scale like the image illustrated in FIG. 13A, for example, is acquired, and image analysis thereof is performed. Thereafter, coloring is performed to generate a predicted image as illustrated in FIG. 13B, for example. Thereafter, the predicted image and the polygon data are integrated (STEP 22).

Then, semantic annotation (annotation) is performed (STEP 23). Specifically, labeling is applied to each pixel of the image. Thereby, a vast amount (for example, 25000 pieces or more) of training data is generated.

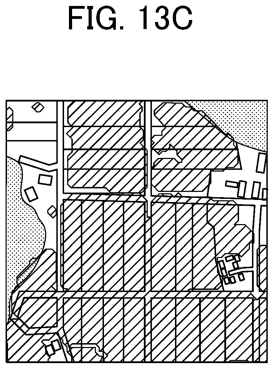

Then, learning is performed (STEP 24). Specifically, a model is generated based on the generated training data. The output of the generated model is output as an image, and the evaluation index is output as an accuracy rate (ACCURACY) and a loss function (LOSS). Thereafter, segmentation is performed. Thereby, the image as illustrated in FIG. 13C, for example, where the polygons P are displayed is generated, and it is displayed as the ground surface image R in the display area A2 of FIG. 8.

While the embodiment of the present invention is described heretofore, the present invention is not limited to the embodiment described above but includes changes, modifications, and the like within the range capable of achieving the object of the present invention.

For example, while the embodiment is described above to be configured such that the farmer F acquires the farming information, not only the farmer F but also a company, a public organization (national or local public entity), an individual, and the like other than the farmer F may view and manage the farming information. This makes it possible to accumulate various kinds of information relating to agriculture existing all over the world can be provided for use, so that it is possible to break away from farming that depends on the experience of the farmer F as in conventional cases. As a result, anyone can do farming by using the accumulated information, so that it is expected to stop reduction in agricultural working population.

Furthermore, for example, while the embodiment is described to be configured such that the field information is acquired from the ground sensor 3, the artificial satellite 4, and the existing data, the configuration is not limited thereto. For example, it is also possible to acquire the field information from the farmer terminal 2. In this case, for example, a result of questionnaire conducted for the farmer F, use state of the dedicated app, personal information such as credit card information, or the like may be acquired as the field information. Thereby, information that cannot be acquired from the ground sensor 3, the artificial satellite 4, and the existing data can be acquired as the field information. Furthermore, it is also possible to acquire, from the farmer terminal 2, information that reinforces the information acquired from the ground sensor 3 and the artificial satellite 4. As a result, precision of the field information as well as the farming information and the credit information generated on the basis of the field information can be increased.

Furthermore, for example, the form of the UI illustrated in FIG. 8 is simply an example. A UI in a form different from the form illustrated in FIG. 8 may be displayed on the farmer terminal 2.

Furthermore, both of the system configuration illustrated in FIG. 5 and the hardware configuration of the server 1 illustrated in FIG. 6 are simply presented as examples for achieving the object of the present invention, and the configurations thereof are not limited thereto.

Furthermore, the functional block diagram illustrated in FIG. 7 is simply presented as an example, and the functional blocks are not limited thereto. That is, as long as the functions capable of executing the entire above-described series of processes are provided to the information processing system, what kinds of functional blocks are to be used for achieving the functions is not specifically limited to the example illustrated in FIG. 7.

Furthermore, where the functional blocks are to be placed is not limited to the case of FIG. 7, but it may be determined arbitrarily. For example, while the example of FIG. 7 is configured to execute the above-described scoring processing by the server 1, at least a part of the scoring processing may be executed by the farmer terminal 2 or the financial institution terminal 5. That is, although the server 1 is configured to include the functional blocks that are necessary for executing the scoring processing, it is simply an example. It is possible to employ a configuration in which the farmer terminal 2 or the financial institution terminal 5 includes at least a part of the functional blocks disposed in the server 1.

Furthermore, the above-described series of processes may be executed by hardware or may be executed by software. Moreover, a single functional block may be configured with hardware alone or software alone, or may be configured with a combination of those.

In a case where the series of processes is executed by software, a program configuring the software is installed to a computer or the like from a network or a recording medium. The computer may be a computer that is mounted to dedicated hardware. Furthermore, the computer may be a computer capable of executing various kinds of functions by installing various kinds of programs, such as a multipurpose smartphone or a personal computer other than the server, for example.

Such recording media having the program is configured not only with a removable medium, not illustrated, which is distributed separately from the device main body for providing the program to an advertiser, but also with a recording medium or the like that is provided to an advertiser while being mounted in advance to the device main body.

In the present description, steps of writing the program to be recorded in the recording medium may not only be the processing executed in time series along the order thereof but may also include the processing that is not necessarily executed in time series but executed in parallel or individually. Furthermore, in the present description, the term "system" means a whole apparatus configured with a plurality of devices, a plurality of units, and the like.

In short, the information processing device to which the present invention is applied may simply need to have a following configuration, and it is possible to employ various kinds of embodiments. That is, the information processing device (for example, the server 1 of FIG. 7) to which the present invention is applied includes: an acquisition unit (for example, the field information acquisition unit 10 of FIG. 7) that acquires first information (for example, the field information described above) relating to a field of a farmer (for example, the farmer F of FIG. 1), including at least information relating to soil; and a generation unit (for example, the presentation information generation unit 105 of FIG. 9) that generates second information (for example, the farming information of FIG. 1) relating to harvestability of the field and third information (for example, the credit information of FIG. 1) relating to credibility of the farmer based on the first information.

Thereby, information relating to the field of the farmer is acquired, and the information relating to harvestability of the field and the information relating to credibility of the farmer are generated based on the acquired information. As a result, it becomes possible to easily grasp the potential harvest yield of the field, so that the financial institution can actively respond to a request for a small loan (microfinancing) from the farmer. Furthermore, since it helps the farmer receive a small loan (microfinancing) from the financial institution easily, the farmer can do active farm management.

Furthermore, the information processing device further includes a sectioning unit (for example, the polygon generation unit 101 of FIG. 7) that sections an image indicating a ground surface captured from the air (for example, the ground surface image R of FIG. 4) into each unit (for example, the polygon P of FIG. 4) indicating the field, in which the acquisition unit acquires the first information for each of the units, the generation unit generates the second information and the third information for each of the units based on the first information, and the information processing device further including a display control unit (for example, the display control unit 106 of FIG. 7) that executes control for visualizing and displaying the second information or the third information for each of the units in the captured image.

This makes it possible to easily grasp the information relating to the potential harvest yield of each field and the credibility of the farmer visually, so that the financial institution can more actively respond to a request for a small loan (microfinancing) from the farmer. Furthermore, since it helps the farmer receive a small loan (microfinancing) from the financial institution easily, the farmer can do more active farm management.

The information processing device further including an evaluation unit (for example, the evaluation analysis unit 104 of FIG. 7) that performs evaluation of the field for each of the units based on the first information, in which the generation unit can generate the second information and the third information based on a result of the evaluation.

Thereby, the information relating to more reliable potential harvest yield of the field and credibility of the farmer can be generated based on the appropriate evaluation result.

Furthermore, the acquisition unit can acquire, as the first information, each of information (for example, the ground data of FIG. 1) acquired from a sensor group placed in the field and information (for example, the satellite data of FIG. 1) acquired from an artificial satellite capable of capturing an image of the field.

This makes it possible to acquire highly reliable data in which microdata acquired from the sensor group placed in the field and microdata acquired from the artificial satellite complement each other. As a result, the farming information and the credit information can be generated based on the highly reliable data.

Furthermore, the information acquired from the sensor group includes information relating to at least one selected from air temperature, soil temperature, precipitation, wind speed, wind direction, soil moisture content, and amount of sunlight, and the information acquired from the artificial satellite includes information relating to at least one selected from the air temperature, the amount of sunlight, ground surface temperature, the soil moisture content, the precipitation, plant activity, protein content, soil humus content, and soil nitrogen content.

Thereby, it is possible to acquire the highly reliable data in which the information relating to the air temperature, the soil temperature, the precipitation and the like from the sensor group placed in the field, the information relating to the air temperature, the amount of sunlight, the ground surface temperature, the soil moisture content, and the like acquired from the artificial satellite complement each other. As a result, it becomes possible to generate the farming information and the credit information based on the highly reliable data.

### EXPLANATION OF REFERENCE NUMERALS

1 Server, 2 Farmer terminal, 3 Ground sensor, 4 Artificial satellite, 5 Financial institution terminal, 11 CPU, 12 ROM, 13 RAM, 14 Bus, 15 Input/output interface, 16 Input unit, 17 Output unit, 18 Storage unit, 19 Communication unit, 20 Drive, 40 Removable medium, 101 Polygon generation unit, 102 Registration reception unit, 103 Field information acquisition unit, 104 Evaluation analysis unit, 105 Presentation information generation unit, 106 Display control unit, 131 Ground data acquisition unit, 132 Satellite data acquisition unit, 151 Farming information generation unit, 152 Credit information generation unit, 181 Ground surface image DB, 182 Field DB, G Service provider, F Farmer, B Financial institution, R Ground surface image, P Polygon, N Network, A1, A2 Display area, B Button

## Claims

1. An information processing device, comprising:
an acquisition unit that acquires first information relating to a field of a farmer, the first information including at least information relating to soil; and
a generation unit that generates second information relating to harvestability of the field and third information relating to credibility of the farmer based on the first information.

2. The information processing device according to claim 1, further comprising a sectioning unit that sections a captured image indicating a ground surface captured from the air into units indicating the field, wherein
the acquisition unit acquires the first information for each of the units,
the generation unit generates the second information and the third information for each of the units based on the first information, and
the information processing device further comprises a display control unit that executes control for visualizing and displaying the second information or the third information for each of the units in the captured image.

3. The information processing device according to claim 1 or 2, further comprising an evaluation unit that performs evaluation of the field for each of the units based on the first information, wherein
the generation unit generates the second information and the third information based on a result of the evaluation.

4. The information processing device according to any one of claims 1 to 3, wherein the acquisition unit acquires, as the first information, each of information acquired from a sensor group placed in the field and information acquired from an artificial satellite capable of capturing an image of the field.

5. The information processing device according to claim 4, wherein
the information acquired from the sensor group includes information relating to at least one selected from air temperature, soil temperature, precipitation, wind speed, wind direction, soil moisture content, and amount of sunlight, and
the information acquired from the artificial satellite includes information relating to at least one selected from the air temperature, the amount of sunlight, ground surface temperature, the soil moisture content, the precipitation, plant activity, protein content, soil humus content, and soil nitrogen content.
